(19) Europäisches Patentamt
European Patent Office
Office européen des brevets

(11) **EP 4 024 253 B1**

(12) **EUROPEAN PATENT SPECIFICATION**

(45) Date of publication and mention
of the grant of the patent:
**25.10.2023 Bulletin 2023/43**

(51) International Patent Classification (IPC):
***G06F 21/55*** *(2013.01)*

(52) Cooperative Patent Classification (CPC):
**G06F 21/554; G06F 21/552**

(21) Application number: **21218261.2**

(22) Date of filing: **30.12.2021**

(54) **DETECTION OF MALICIOUS ACTIVITY ON ENDPOINT COMPUTERS BY UTILIZING ANOMALY DETECTION IN WEB ACCESS PATTERNS, IN ORGANIZATIONAL ENVIRONMENTS**

DETEKTION VON BÖSARTIGER AKTIVITÄT AUF ENDPUNKTRECHNERN UNTER VERWENDUNG VON ANOMALIEDETEKTION IN WEBZUGRIFFSMUSTERN IN ORGANISATORISCHEN UMGEBUNGEN

DÉTECTION D'ACTIVITÉ MALVEILLANTE SUR DES ORDINATEURS D'EXTRÉMITÉ AU MOYEN DE DÉTECTION D'ANOMALIES DANS LES MODÈLES D'ACCÈS WEB, DANS DES ENVIRONNEMENTS ORGANISATIONNELS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **31.12.2020 IL 27990520**

(43) Date of publication of application:
**06.07.2022 Bulletin 2022/27**

(73) Proprietor: **Deutsche Telekom AG**
**53113 Bonn (DE)**

(72) Inventors:
• **Vaisman, Yizhak**
**8436812 Beer Sheva (IL)**
• **Cohen, Dvir**
**7686019 Mazkeret Batya (IL)**
• **Elovici, Yuval**
**7986400 Arugot (IL)**
• **Shabtai, Asaf**
**7684200 Hulda (IL)**
• **Brodt, Oleg**
**8471621 Beer Sheva (IL)**

• **Mimran, David**
**6215505 Tel Aviv (IL)**
• **Lehman, Heiko**
**12587 Berlin (DE)**

(74) Representative: **Meissner Bolte Partnerschaft mbB**
**Patentanwälte Rechtsanwälte**
**Postfach 86 06 24**
**81633 München (DE)**

(56) References cited:
**US-A1- 2018 063 168      US-A1- 2020 076 842**

• **SHIBAHARA TOSHIKI ET AL: "Malicious URL sequence detection using event de-noising convolutional neural network", 2017 IEEE INTERNATIONAL CONFERENCE ON COMMUNICATIONS (ICC), IEEE, 21 May 2017 (2017-05-21), pages 1-7, XP033132713, DOI: 10.1109/ICC.2017.7996831 [retrieved on 2017-07-28]**

EP 4 024 253 B1

**Description**

**Field of the Invention**

The present invention relates to the field of cyber security. More particularly, the present invention relates to a system and method for detecting suspicious machines based on web access patterns in group (organizational) environments.

**Background of the Invention**

Nowadays, access to the Internet is allowed by many organizations and serves as part of the working environment, as well as one of the main tools for information acquisition. However, access from the internal network of an organization to the Internet exposes the internal endpoints and users of the organizational environment to different types of threats. This happens particularly upon browsing a site containing malware, such as malicious scripts, Trojan downloaders, exploits (an exploit is an attack on a computer system, especially one that takes advantage of a particular vulnerability the system offers to intruders), and adware (as advertisement-supported software that automatically generates adverts on the screen, usually within a web browser. Some forms of adware are highly manipulative and create an open door for malicious programs).

Once computer viruses have infected a certain computer, they utilize common web protocols, such as HTTP and HTTPS, to conduct their malicious actions, such as coordination with command and control servers, payload (is the part of transmitted data that is the actual intended message) download and data exfiltration. These malicious intention-originated web activities are part of the overall web activities of almost any computer that is connected to a data network.

Users and applications on a certain enterprise computer (which is an endpoint machine, such as a mobile device, a desktop computer or a laptop) render common usage patterns of web resources over time, due to their repetitive nature of work, common tasks, and personal interests.

Modern malicious codes running on such computers usually communicate via web protocols to fulfill their malicious intentions. Web accesses of these malicious codes exhibit deviation from the regular usage patterns of such machines. The typical usage patterns exhibited by a certain computer in an enterprise network often share similarities with other users within the same organizations, due to the similar nature of the work of the respective computers' users. Furthermore, people across different organizations that share the same functional role or in related industries with shared behavioral patterns also share highly similar web usage patterns on their computers. The similarity across different computers is even further enhanced, since users with similar functional roles use quite similar applications on their computers. Most of the time, these applications exhibit similar web usage patterns in order to function properly. Such similar web usage patterns may be used for improving the detection of malicious activities.

It is therefore an object of the present invention to provide a system and method for detecting malicious activity on suspicious endpoint computers in organizational environments, based on web access patterns in a group environment.

US 2020/0076842 discloses techniques for contextual embedding of features of operational logs or network traffic for anomaly detection based on sequence prediction. In an embodiment, a computer has a predictive recurrent neural network (RNN) that detects an anomalous network flow. In an embodiment, an RNN that has stateful neural circuitry such as LSTM contextually transcodes sparse feature vectors that represent log messages into dense feature vectors that may be predictive or used to generate predictive vectors.

US 2018/0063168 discloses a computer-implemented data processing method that comprises executing an RNN comprising nodes each implemented as an LSTM cell and comprising links between nodes that represent outputs of LSTM cells and inputs to LSTM cells, wherein each LSTM cell implements an input layer, hidden layer and output layer of the RNN; receiving network traffic data associated with networked computers; extracting feature data representing features of the network traffic data and providing the feature data to the RNN; classifying individual URLs as malicious or legitimate using LSTM cells of the input layer, wherein inputs to the LSTM cells are individual characters of the URLs, and wherein the LSTM cells generate feature representation; based on the feature representation, generating signals to a firewall device specifying either admitting or denying the URLs. Other objects and advantages of the invention will become apparent as the description proceeds.

**Summary of the Invention**

The object of the present invention is solved by the independent claims. In one aspect, a method for detecting malicious activity on endpoint computer machines utilizing anomaly detection in web access patterns in organizational environments is disclosed, comprising the steps of:

    a) receiving input raw data including raw web proxy access data and error logs data;

b) preprocessing the input raw data by reformatting the data by dividing the data into a fixed-size sequence, wherein each website in the same sequence belongs to the same machine;
c) running an LSTM algorithm on the preprocessed data and obtaining a loss score for each sequence, such that the greater the loss score, the higher the suspiciousness of the sequence;
d) running a pre-trained classifier for classifying each website as being benign or suspicious;
e) for each suspicious machine, calculating a severity score using the data provided by the preceding steps, along with additional data provided by the proxy;
f) investigating suspicious users, using a dashboard showing suspicious users; and
g) creating a similarity graph between users in order to find similar users to a user that was found to be infected by malicious software, and detecting malicious activity by investigating the similar users.

In another aspect, a system for detecting malicious activity on endpoint computers utilizing anomaly detection in web access patterns in organizational environments is disclosed, comprising:

a) data collection and pre-processing module for collecting, aggregating and transforming received log data into temporal website sequences of length n, such that each sequence is from a specific user;
b) an LSTM training module, for feeding each sequence, including the sequence's machine ID to a neural network for performing a training phase and predicting the next website in the sequence;
c) an anomaly detection module that uses LSTM for feeding all the sequences into the LSTM once again, after the LSTM is trained and is able to predict the next token correctly, the LSTM provides a "probability score" representing how probable the sequence is for every sequence, such that if the probability score is above a predetermined threshold t, deciding that the sequence is suspicious;
d) a benign URL's remover being a pre-trained classifier, for;

d.1) classifying each website as malicious or benign;
d.2) if a benign website appears in a malicious sequence, filter the benign website out;
d.3) if most of the suspicious websites of a user are classified as benign, ignoring the user; and

e) an alerting module, for proving alerts regarding the detection of malicious activity by investigating the similar users.

The following data may be provided for each machine in the organization:

i. each machine sequences of websites, each website inside each sequence, and the sequence score as provided by the LSTM;
ii. for each website inside the sequences, the website's classification that provided by the benign URL's remover, benign or suspicious; and
iii. a severity score for each machine in the weblogs that contains the daily score and the decay score.

The system may further comprise:

a) a machine component for visualizing the suspicious machines in a predetermined period;
b) a top-machines component, for showing the most suspicious machines of a current day, ordered according to a severity score;
c) a website component, for showing the websites accessed by the machine chosen in the machine component or the top-machines components;
d) a filter component for filtering less relevant data; and
e) a similarity component, for finding a malicious software which infects a machine in an organization by creating a graph that represents the machines that have similar behavior to the selected machine in the machine component or the top-machines component.

The similarity between the machines may be calculated using Jaccard Similarity, defined as:

$$similarity\ (machine1, machine2) = \frac{Inteserction\ between\ the\ machine\ websites}{union\ of\ all\ the\ machine\ unique\ website}$$

The filter component may be adapted to perform:

i. filtering Sequence loss, for determining which sequences will be presented to the system, such that if the sequence loss is lower than the predetermined number, all the websites inside the sequence will not appear in the website component, and the number of websites in the machine component will be reduced;

ii. filtering result for allowing selecting Denied, Proxied, or Observed results;

iii. classifier labeling, for allowing selecting between benign or suspicious website labels; and

iv. percentage averaging for allowing removing machines having a percentage of their suspicious websites lower than the predetermined number, from the machine components visualization.

**Brief Description of the Drawings**

The above and other characteristics and advantages of the invention will be better understood through the following illustrative and non-limitative detailed description of preferred embodiments thereof, with reference to the appended drawings, wherein:

- Fig. 1 shows a graph of the number of unique suspicious websites in each day of the data, where each color represents a different machine of a corresponding user;
- Fig. 2 shows an example for the top-machines component that represents the top 10 suspicious machines and suspiciousness scores of their sequence;
- Fig. 3 shows a list of the websites and their corresponding features, specified in Table 1 below;
- Fig. 4 shows an example of data filtering representation, which includes the filter result, the classifier label and the average percentage;
- Fig. 5 shows a similarity graph between several machines; and
- Fig. 6 shows a full dashboard, which represents the machine component that visualizes the suspicious machines in a period of several days.

**Detailed Description of the Invention**

The system proposed by the present invention uses the output of the system disclosed in Israeli patent application 279697 or co-pending European application No. 21216471.9 (that are related to detecting suspicious websites in proxy's data streams), to provide a system and method for detecting suspicious machines (being computerized devices, such as computers and servers), based on web access patterns in a group (organizational) environment or on endpoint computers, by utilizing anomaly detection in web access patterns in organizational environments.

Israeli Patent Application No. 279697 (IL279697) discloses a system for identifying similar computers vis-a-vis normal web usage patterns across different areas in an organization and across organizations. The knowledge extracted from the baseline of common usage patterns is then utilized for identifying deviation in web usage patterns, as an indication for the presence of malicious activity on specific endpoints or a group of endpoints, where the deviation was identified.

The system disclosed in IL279697 is based on utilizing raw web proxy access and error logs as an input. Then, during a preprocessing stage, the system cleans and transforms the raw input data for reformatting, making corrections, and cleaning the data. As a part of the preprocessing and reformatting process, the system divides the data into fixed-size sequences, where each website in the same sequence belongs to the same machine. After preprocessing, the system runs an LSTM algorithm (which is a type of neural network that is commonly used for time series data and natural language processing) on the processed data so as to obtain a loss score for each sequence. The greater is the loss score, the higher is the suspiciousness of the sequence.

Since a benign website can appear in a malicious sequence, the system disclosed in IL279697 runs a pre-trained classifier for classifying each website as benign or suspicious. With the data provided by the previous steps, along with additional data provided by the proxy, the system disclosed in IL279697 calculates a severity score for each suspicious machine. Finally, in order to help the analyst investigate the suspicious users, a dashboard has been created using Tableau software. The dashboard contains several components for making the investigation easier for the analyst. Also, the system disclosed in IL279697 creates a similarity graph between users, in order to find users who are similar to a user that was found to be infected by malicious software, and investigate these users, as well.

The system disclosed in IL279697 includes several modules:

**1) Data collection and pre-processing module** - the data collection and pre-processing module collects data to be used, which consists of proxy logs received by Symantec's Blue Coat (Blue Coat Advanced Web & Cloud Security is a protection tool against web and network-based threats, which enables cloud data protection, and provides flexible business policy control across enterprise and cloud, including web, social and mobile networks). Once the log data arrive at the system, it is collected, aggregated, and transformed into temporal website sequences of length n, where each sequence is from a specific user. In addition, very popular websites are removed.

**2) Long-Short-Term-Model (LSTM) training module** - each sequence, including the sequence's machine ID, is fed into a neural network for a training phase. The neural network predicts the next token (website) in the sequence.

**3) Anomaly detection module using LSTM** - after the model is trained and is able to predict the next token correctly, all the sequences are fed into the model once again. For every sequence, the model provides a "probability score" representing how probable the sequence is. In case the score is above a specific threshold t, the sequence is considered suspicious.

**4) Benign URL's remover** - in some cases, a benign website could appear in a malicious sequence. For that reason, a pre-trained classifier is used to classify each website as malicious or benign in order to filter the benign out. In case that most of the suspicious websites of a user are classified as benign, the user is ignored.

**5) Alerting module** - the system output alerts based on predefined alert logic. This logic takes into account several features such as the number of suspicious websites of a machine, the number of websites blocked by the proxy, etc. In addition, the alerting module outputs a dashboard for the visualization of the results, where an analyst can easily investigate the situations and extract meaningful insights.

After running the algorithm, the following data is gathered for each machine in the organization:

**1)** Each machine sequences of websites, each website inside each sequence, and the sequence score as provided by the LSTM.

**2)** For each website inside the sequences, the website's classification that provided by the benign URL's remover, benign or suspicious.

**3)** A severity score for each machine in the weblogs that contains the daily score and the decay score, as mentioned in IL279697.

The system disclosed in IL279697 labels suspicious machines, finds a similarity group of suspicious machines, and helps a cyber analyst investigate the suspicious machines and the suspicious websites provided by the algorithm. Tableau software (Seattle, WA, U.S.A. - a data visualization software that is used for data science and business intelligence) was used as a visualization framework.

The system proposed by the present invention comprises the following components:

### The machine component

The machine component is adapted to visualize the suspicious machines in a period of a few days, for example.

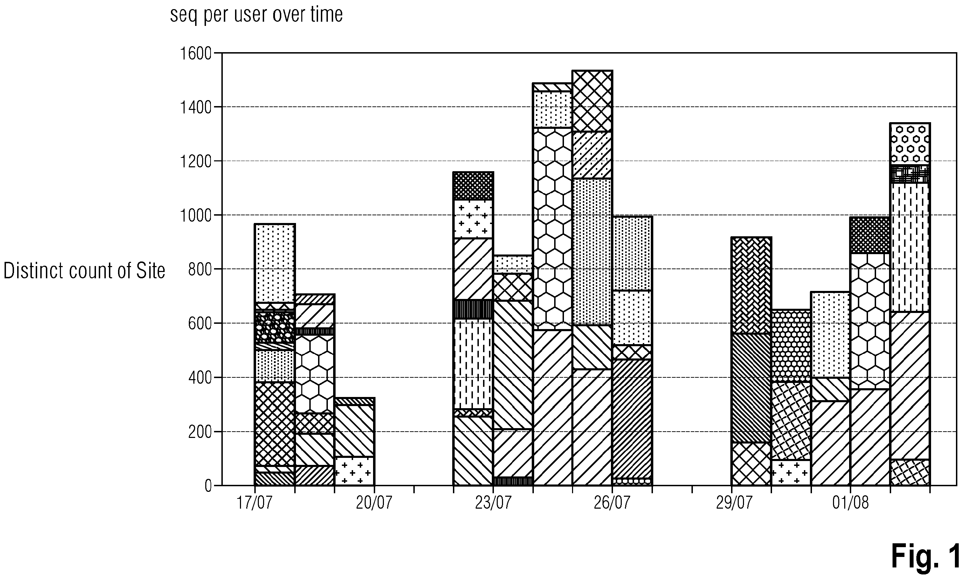

Fig. 1 shows a graph of the number of unique suspicious websites in each day of the data, where each color represents a different machine of a corresponding user. As can be seen, many users appear on multiple days. Each column represents a different day, and different colors represent different machines. The greater the number of websites related to a machine, the higher the area that corresponds to that machine in the graph. If a particular machine appears on different days, that machine is represented by the same color.

### The top-machines component

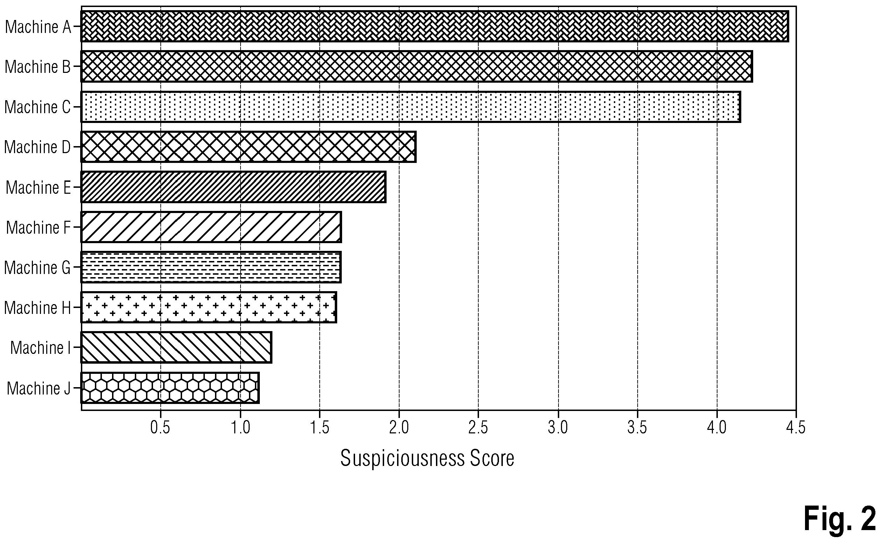

Fig. 2 shows an example for the top-machines component that represents the top 10 suspicious machines and suspiciousness scores of their sequence. As shown, from the results of the top-machines component, an analyst can see the most suspicious machines of the current day ordered by the severity score, as defined in IL279697. To help the analyst investigate the suspicious machine that appeared in the top-machines component, the analyst can click on the machine in this component, and the system will label the entire clicked machine's appearance in the top-machines component.

### The website component

In the website component, an analyst can see the websites that have been accessed by the machine selected by the top-machines component. The system provides relevant data that is aggregated from data provided by the proxy. The additional data will help the analyst to decide if the website is malicious or benign.

Table 1 below describes the additional data provided by the system, on each website.

**Table 1 -** list of website data

| Feature | Description |
|---|---|
| Filter result | Content filtering result: Denied, Proxied or Observed |
| Avg. sequence loss | The average sequence loss of all the sequences the website appeared |
| Number of machines | The number of machines that accessed to the website |
| Number of records | The website amount of records |
| Click-to-Action (c2a) average | Number of bytes sent from the client to the appliance. |
| Avg. Time Taken | Average time taken (in seconds) to process from the first client request received by the proxy. |
| time taken ICAP | The average time is taken (in milliseconds) to process the request from the first byte of client request data received by the proxy, to the last byte sent by the proxy to the client. This includes the delays caused by the Internet Content Adaptation Protocol (ICAP - is a lightweight HTTP-like protocol specified in RFC 3507 which is used to extend transparent proxy servers, thereby freeing up resources and standardizing the way in which new features are implemented. ICAP is generally used to implement virus scanning and content filters in transparent HTTP proxy caches). |

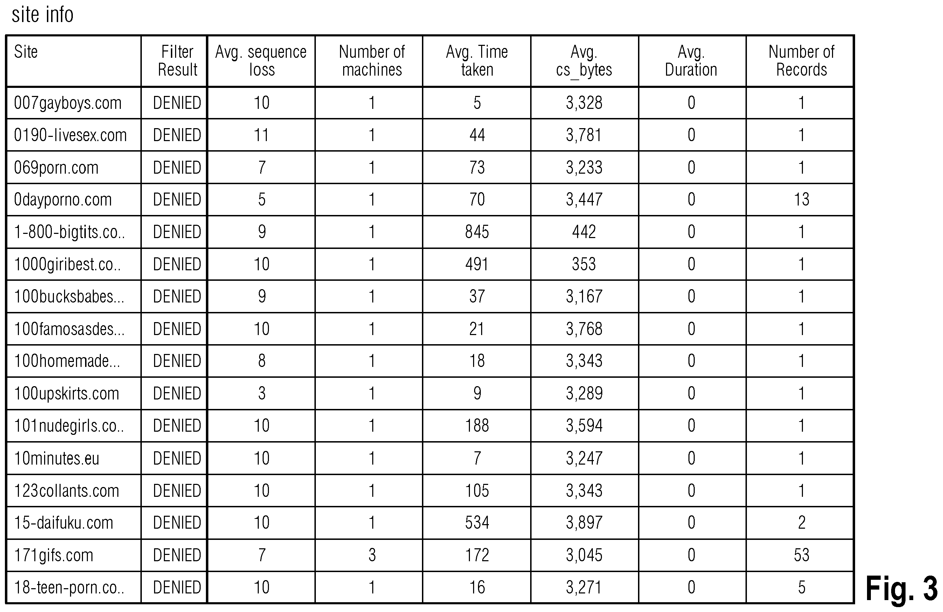

Fig. 3 shows a list of the websites and their corresponding features, specified in Table 1 above.

**The filter component**

Each day and each user may contain a huge amount of data. This large amount of data can make it difficult for the analyst to investigate the suspicious users. A filter component has been created, in order to make it easier for the analyst to investigate the data. This filter component is adapted to filter less relevant data and focus the analyst on the important data.

The filter component contains several features:

**1)** Sequence loss filtering- this filter determines which sequences will be presented to the system. If the sequence loss is lower than the predetermined number, all the websites inside the sequence will not appear in the website component, and the number of websites in the machine component will be reduced.

**2)** Filter Results- the analyst can choose which filter results he wants to see Denied, Proxied, or Observed. For example, if the analyst chooses the Denied filter result, only the website denied by the proxy will appear in the website component, and the number of websites in the machine component will be reduced.

**3)** Classifier Label - the analyst can choose which website label provided by the benign URL's remover he wants to see Benign or Suspicious. For example, if the analyst chose Suspicious as the classifier label, only the website that has been classified as suspicious by the benign URL's remover will appear in the website component, and the number of websites in the machine component will be reduced.

**4)** Average Percentage Filter - by using this filter, the analyst can remove machines with a percentage of suspicious websites that is lower than the selected number. The machine that will be filtered by this filter will be removed from the machine components visualization.

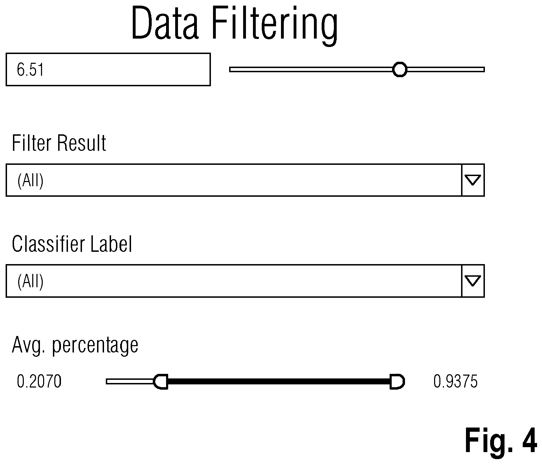

Fig. 4 shows an example of data filtering representation, which includes the filter result, the classifier label and the average percentage.

**The similarity component**

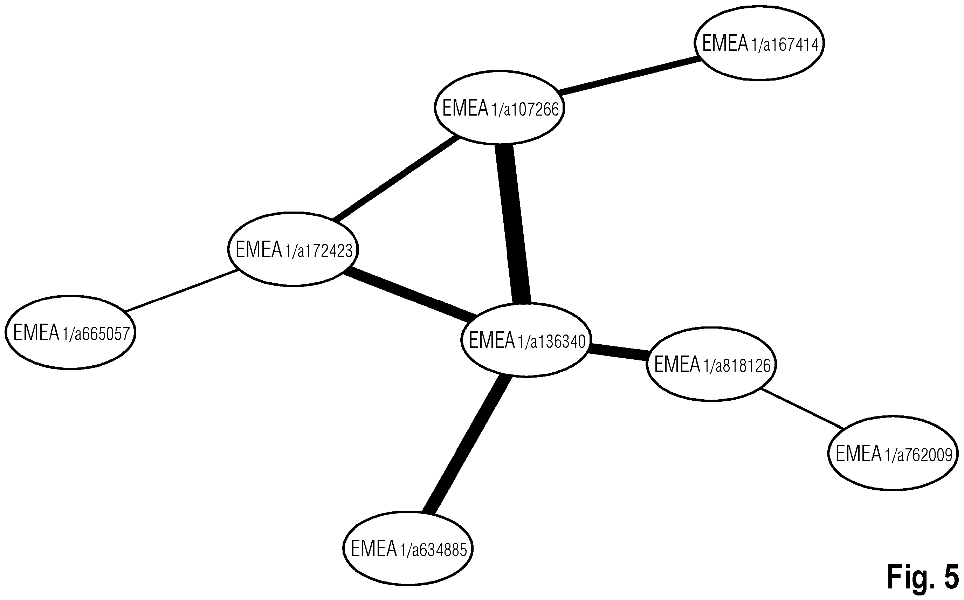

In most cases, when malicious software infects a machine in an organization, it is trying to spread inside the organization. The similarity component is adapted to find such malicious software. Fig. 5 shows a similarity graph between several machines, where the thicker the node, the higher the similarity between the machines.

As can be seen in Fig. 5, the similarity component creates a graph that represents the machines that have similar behavior to the selected machine in the machine component or the top-machines component. The thicker the node between the machines, the more similar they are.

In order to calculate the similarity between the machines, Jaccard Similarity (that measures similarity between finite sample sets) was used, as defined below:

$$similarity\ (machine1, machine2) = \frac{Inteserction\ between\ the\ machine\ websites}{union\ of\ all\ the\ machine\ unique\ website}$$

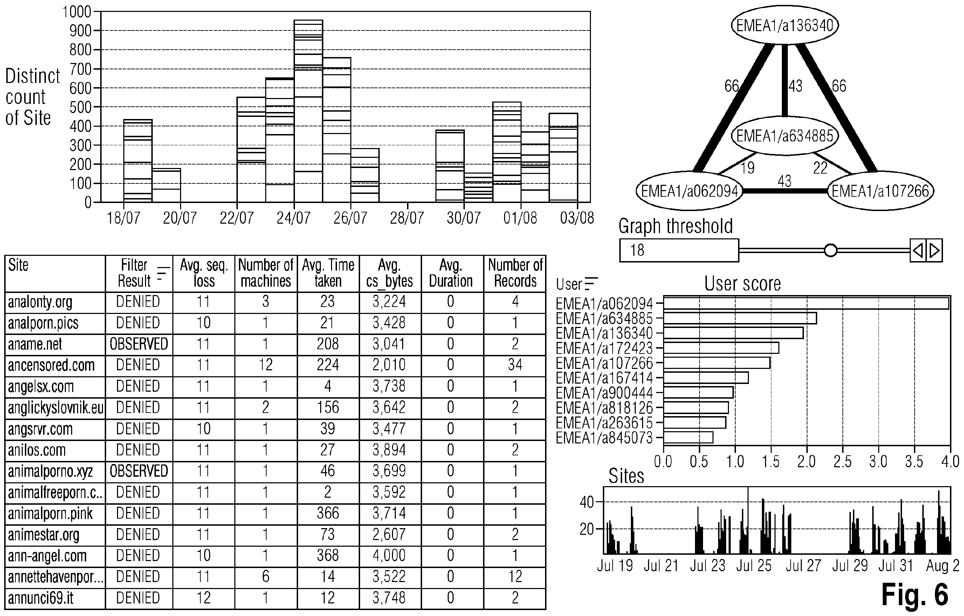

Fig. 6 shows a full dashboard, which represents the machine component that visualizes the suspicious machines in a period of several days.

The above examples and description have of course been provided only for the purpose of illustration, and are not intended to limit the invention in any way. As will be appreciated by the skilled person, the invention can be carried out in a great variety of ways, employing more than one technique from those described above, all without exceeding the scope of the invention, as defined by the claims.

**Claims**

1. A method for detecting malicious activity on endpoint computer machines in organizational environments by utilizing anomaly detection in web access patterns, comprising:

   a) receiving input raw data including raw web proxy access data and error log data;
   b) preprocessing and reformatting said input raw data by dividing said input raw data into fixed-size website sequences, wherein each sequence is from a specific user;
   c) running an LSTM algorithm on the preprocessed data and obtaining a loss score for each sequence, such that the greater the loss score, the higher the suspiciousness of the sequence;
   d) running a pre-trained classifier for classifying each website as being benign or suspicious; and
   e) for each suspicious machine, calculating a severity score using data provided by said LSTM algorithm, along with additional data provided by said proxy, wherein said method further comprises the steps of:
   f) investigating suspicious machines by using a machine component for visualizing suspicious machines in a predetermined period, a top-machines component for showing most suspicious machines of a current day, ordered according to a severity score, and a website component for showing websites accessed by a machine selected by the machine component or the top-machines component; and
   g) creating a similarity graph that represents the machines that have similar behavior to the machine selected by the machine component or the top-machines component to find malicious software which infects a machine in an organization.

2. A system for detecting malicious activity on endpoint computers utilizing anomaly detection in web access patterns in organizational environments, comprising:

   a) data collection and pre-processing module for collecting, aggregating and transforming received log data into temporal website sequences of length n, such that each sequence is from a specific user;
   b) an LSTM training module, for feeding each sequence, including the sequence's machine ID to a neural network for performing a training phase and predicting the next website in the sequence;
   c) an anomaly detection module that uses LSTM for feeding all the sequences into said LSTM once again, after said LSTM is trained and is able to predict the next token correctly, said LSTM provides a "probability score" representing how probable the sequence is for every sequence, such that if said probability score is above a predetermined threshold t, deciding that the sequence is suspicious;
   d) a benign URL's remover being a pre-trained classifier, for:

      d.1) classifying each website as malicious or benign;
      d.2) if a benign website appears in a suspicious sequence, filter said benign website out; andd.3) if most of the suspicious websites of a user are classified as benign, ignoring said user; and

   e) an alerting module, for proving alerts upon detecting malicious activity, wherein said system further comprises:
   f) a machine component for visualizing suspicious machines in a predetermined period;
   g) a top-machines component, for showing most suspicious machines of a current day, ordered according to a severity score;

h) a website component, for showing websites accessed by a machine selected by the machine component or the top-machines component;

i) a filter component for filtering less relevant data; and

j) a similarity component, for finding malicious software which infects a machine in an organization by creating a graph that represents the machines that have similar behavior to the machine selected by the machine component or the top-machines component.

3. A system according to claim 2, wherein the following data is provided for each machine in the organization:

a) each machine sequences of websites, each website inside each sequence, and the sequence score as provided by the LSTM;

b) for each website inside the sequences, the website's classification that provided by the benign URL's remover, as benign or suspicious website; and

c) a severity score for each machine in the weblogs that contains the daily score and the decay score.

4. A system according to claim 2, wherein the similarity between the machines is calculated using Jaccard Similarity, defined as:

$$similarity\,(machine1, machine2) = \frac{Inteserction\ between\ the\ machine\ websites}{union\ of\ all\ the\ machine\ unique\ website}$$

5. A system according to claim 2, wherein the filter component is adapted to perform:

a) filtering sequence loss, for determining which sequences will be presented to the system, such that if the sequence loss is lower than a predetermined number, all the websites inside said sequence will not appear in the website component, and the number of websites in the machine component will be reduced;

b) filtering result for allowing selecting Denied, Proxied, or Observed results;

c) classifier labeling, for allowing selecting between benign or suspicious website labels; and

d) percentage averaging for allowing removing machines having a percentage of their suspicious websites lower than the predetermined number, from the machine components visualization.

**Patentansprüche**

1. Verfahren zum Erkennen schädlicher Aktivitäten auf Endpunkt-Computermaschinen in organisationsbezogenen Umgebungen unter Verwendung von Anomalieerkennung in Webzugriffsmustern, umfassend:

a) Empfangen von Eingabe-Rohdaten, die rohe Web-Proxy-Zugriffsdaten und Fehlerprotokolldaten umfassen;

b) Vorverarbeiten und Neuformatieren der Eingabe-Rohdaten durch Aufteilen der Eingabe-Rohdaten in Webseitensequenzen fester Größe, wobei jede Sequenz von einem bestimmten Benutzer stammt;

c) Ausführen eines LSTM-Algorithmus an den vorverarbeiteten Daten und Erhalten einer Verlustbewertung für jede Sequenz derart, dass die Verdächtigkeit der Sequenz umso höher ist, je höher die Verlustbewertung ist;

d) Ausführen eines vortrainierten Klassifikators zum Klassifizieren jeder Webseite als harmlos oder verdächtig; und

e) Berechnen für jede verdächtige Maschine einer Schweregradbewertung unter Verwendung von Daten, die von dem LSTM-Algorithmus bereitgestellt werden, zusammen mit zusätzlichen Daten, die von dem Proxy bereitgestellt werden,

wobei das Verfahren ferner die folgenden Schritte umfasst:

f) Untersuchen verdächtiger Maschinen unter Verwendung einer Maschinen-Komponente zur Visualisierung verdächtiger Maschinen in einem vorgegebenen Zeitraum, einer Obere-Maschinen-Komponente zur Anzeige der verdächtigsten Maschinen eines aktuellen Tags, geordnet nach einer Schweregradbewertung, und einer Webseiten-Komponente zur Anzeige von Webseiten, auf die von einer von der Maschinen-Komponente oder der Obere-Maschinen-Komponente ausgewählten Maschine zugegriffen wurde; und

g) Erzeugen eines Ähnlichkeitsdiagramms, das die Maschinen darstellt, die ein ähnliches Verhalten wie die von der Maschinen-Komponente oder der Obere-Maschinen-Komponente ausgewählte Maschine aufweisen, um Schadsoftware zu finden, die eine Maschine in einer Organisation infiziert.

2. System zum Erkennen schädlicher Aktivitäten auf einem Endpunkt-Computer, das Anomalieerkennung in Webzugriffsmustern in organisationsbezogenen Umgebungen verwendet, umfassend:

a) ein Datenerfassungs- und Vorverarbeitungsmodul zum Erfassen, Aggregieren und Umwandeln von empfangenen Protokolldaten in temporale Webseitensequenzen der Länge n derart, dass jede Sequenz von einem bestimmten Benutzer stammt;
b) ein LSTM-Trainingsmodul zum Eingeben jeder Sequenz, einschließlich der Maschinenkennung der Sequenz, in ein neuronales Netz zum Ausführen einer Trainingsphase und Vorhersagen der nächsten Webseite in der Sequenz;
c) ein Anomalieerkennungsmodul, das LSTM verwendet, um alle Sequenzen noch einmal in das LSTM einzugeben, nachdem das LSTM trainiert wurde und imstande ist, das nächste Token richtig vorherzusagen, wobei das LSTM eine "Wahrscheinlichkeitsbewertung" bereitstellt, die für jede Sequenz darstellt, wie wahrscheinlich die Sequenz ist, sodass entschieden wird, dass die Sequenz verdächtig ist, wenn die Wahrscheinlichkeitsbewertung über einem vorgegebenen Schwellenwert t liegt;
d) einen Entferner von harmlosen URL, der ein vortrainierter Klassifikator ist, zum:

d.1) Klassifizieren jeder Webseite als schädlich oder harmlos;
d.2) wenn eine harmlose Webseite in einer verdächtigen Sequenz erscheint, Ausfiltern der harmlosen Webseite; und d.3) wenn die meisten der verdächtigen Webseiten eines Benutzers als harmlos klassifiziert werden, Ignorieren des Benutzers; und

e) ein Alarmierungsmodul zum Bereitstellen von Alarmen bei Erkennung schädlicher Aktivitäten, wobei das System ferner Folgendes umfasst:
f) eine Maschinen-Komponente zur Visualisierung verdächtiger Maschinen in einem vorgegebenen Zeitraum;
g) eine Obere-Maschinen-Komponente zum Anzeigen der verdächtigsten Maschinen eines aktuellen Tags, geordnet nach einer Schweregradbewertung;
h) eine Webseiten-Komponente zum Anzeigen von Webseiten, auf die von einer von der Maschinen-Komponente oder der Obere-Maschinen-Komponente ausgewählten Maschine zugegriffen wurde;
i) eine Filter-Komponente zum Filtern weniger relevanter Daten; und
j) eine Ähnlichkeitskomponente zum Finden von Schadsoftware, die eine Maschine in einer Organisation infiziert, durch Erzeugen eines Diagramms, das die Maschinen darstellt, die ein ähnliches Verhalten wie die von der Maschinen-Komponente oder der Obere-Maschinen-Komponente ausgewählte Maschine aufweist.

3. System nach Anspruch 2, wobei die folgenden Daten für jede Maschine in der Organisation bereitgestellt werden:

a) alle Maschinensequenzen von Webseiten, jede Webseite in jeder Sequenz und die vom LSTM bereitgestellte Webseitenbewertung;
b) für jede Webseite in den Sequenzen die vom Entferner von harmlosen URL bereitgestellte Klassifizierung der Webseite als harmlose oder verdächtige Webseite; und
c) eine Schweregradbewertung für jede Maschine in den Weblogs, die die tägliche Bewertung und die Verfallsbewertung enthält.

4. System nach Anspruch 2, wobei die Ähnlichkeit zwischen den Maschinen unter Verwendung der Jaccard-Ähnlichkeit berechnet wird, die definiert ist als:

$$\ddot{A}hnlichkeit\ (Maschine1, Maschine2) = \frac{Schnittmenge\ zwischen\ den\ Maschinenwebseiten}{Vereinigungsmenge\ aller\ f\ddot{u}r\ die\ Maschine\ spezifischen\ Webseiten}$$

5. System nach Anspruch 2, wobei die Filter-Komponente geeignet ist, um Folgendes auszuführen:

a) Filtern eines Sequenzverlusts, um zu bestimmen, welche Sequenzen dem System präsentiert werden, sodass dann, wenn der Sequenzverlust kleiner als eine vorgegebene Zahl ist, alle Webseiten in der Sequenz nicht in der Webseiten-Komponente erscheinen werden und die Zahl von Webseiten in der Maschinen-Komponente reduziert wird;
b) Filtern eines Ergebnisses zum Ermöglichen der Wahl von "abgewiesenen", "über den Proxy geleiteten" oder "beobachteten"Ergebnissen;

c) Kennzeichnen eines Klassifikators zum Ermöglichen der Wahl zwischen Kennzeichnungen harmloser oder verdächtiger Webseiten; und

d) Mitteln eines Prozentsatzes zum Ermöglichen des Entfernens von Maschinen, deren Prozentsatz verdächtiger Webseiten unter der vorgegebenen Zahl liegt, aus der Visualisierung der Maschinen-Komponenten.

**Revendications**

1. Procédé destiné à détecter une activité malveillante sur des machines informatiques terminales dans des environnements organisationnels à l'aide d'une détection d'anomalie dans des motifs d'accès au web, comprenant :

   a) la réception de données brutes d'entrée comprenant des données brutes d'accès d'un mandataire Web et des données de journal des erreurs ;

   b) le prétraitement et le reformatage desdites données brutes d'entrée par la division desdites données brutes d'entrée en séquences de site Web de taille fixe, chaque séquence provenant d'un utilisateur spécifique ;

   c) l'exécution d'un algorithme de MLCT sur les données prétraitées et l'obtention d'un score de perte pour chaque séquence, de telle sorte que plus le score de perte est grand, plus la suspicion de la séquence est élevée ;

   d) l'exécution d'un classificateur préentraîné pour classifier chaque site Web comme étant bénin ou suspect ; et

   e) pour chaque machine suspecte, le calcul d'un score de gravité à l'aide de données fournies par ledit algorithme de MLCT, conjointement avec des données supplémentaires fournies par ledit mandataire,

   ledit procédé comprenant en outre les étapes de :

   f) recherche de machines suspectes à l'aide d'un composant de machine pour visualiser des machines suspectes dans une période prédéterminée, d'un composant de machine supérieure pour montrer la plupart des machines suspectes d'un jour actuel, ordonnées selon un score de gravité, et d'un composant de site Web pour montrer des sites Web auxquels accède une machine sélectionnée par le composant de machine ou le composant de machine supérieure ; et

   g) création d'un graphique de similarité qui représente les machines qui ont un comportement similaire à celui de la machine sélectionnée par le composant de machine ou le composant de machine supérieure pour trouver un logiciel malveillant qui infecte une machine dans une organisation.

2. Système de détection d'une activité malveillante sur des ordinateurs terminaux à l'aide d'une détection d'anomalie dans des motifs d'accès au Web dans des environnements organisationnels, comprenant :

   a) un module de collecte et de prétraitement de données destiné à collecter, agréger et transformer des données de journal reçues en séquences de site Web temporelles de longueur n, de telle sorte que chaque séquence provient d'un utilisateur spécifique ;

   b) un module d'apprentissage à MLCT, destiné à fournir chaque séquence, comprenant l'ID de machine de la séquence, à un réseau neuronal pour effectuer une phase d'apprentissage et prédire le site Web suivant dans la séquence ;

   c) un module de détection d'anomalie qui utilise la MLCT pour fournir de nouveau toutes les séquences dans ladite MLCT, après que ladite MLCT a été entraînée et qui est en mesure de prédire correctement le jeton suivant, ladite MLCT fournissant un "score de probabilité " représentant la probabilité de la séquence pour chaque séquence, de telle sorte que si ledit score de probabilité est supérieur à un seuil prédéterminé t, il est décidé que la séquence est suspecte ;

   d) un dispositif d'élimination des URL bénins qui est un classificateur préentraîné, destiné à :

      d.1) classer chaque site Web comme étant malveillant ou bénin ;

      d.2) si un site Web bénin apparaît dans une séquence suspecte, éliminer par filtrage ledit site Web bénin ; et

      d.3) si la plupart des sites Web suspects d'un utilisateur sont classifiés comme bénins, ignorer ledit utilisateur ; et

   e) un module d'alerte, destiné à révéler des alertes lors de la détection d'une activité malveillante, ledit système comprenant en outre :

   f) un composant de machine destiné à visualiser des machines suspectes dans une période prédéterminée ;

   g) un composant de machine supérieure, destiné à montrer la plupart des machines suspectes d'un jour actuel, ordonnées selon un score de gravité ;
h) un composant de site Web, destiné à montrer des sites Web auxquels accède une machine sélectionnée par le composant de machine ou le composant de machine supérieure ;
i) un composant de filtre destiné à filtrer des données moins pertinentes ; et
j) un composant de similarité, destiné à trouver un logiciel malveillant qui infecte une machine dans une organisation en créant un graphique qui représente les machines qui ont un comportement similaire à celui de la machine sélectionnée par le composant de machine ou le composant de machine supérieure.

3. Système selon la revendication 2, les données suivantes étant fournies pour chaque machine dans l'organisation :

a) chaque séquence machine de sites Web, chaque site Web au sein de chaque séquence et le score de séquence tel que fourni par la MLCT ;
b) pour chaque site Web au sein des séquences, la classification du site Web qui est fourni par le dispositif d'élimination des URL bénins, en tant que site Web bénin ou suspect ; et
c) un score de gravité pour chaque machine dans les journaux qui contient le score quotidien et le score de décroissance.

4. Système selon la revendication 2, la similarité entre les machines étant calculée à l'aide d'une similarité de Jaccard, définie comme :

$$Similarité\ (machine1, machine2) = \frac{Intersection\ entre\ les\ sites\ Web\ de\ machine}{Union\ de\ tous\ les\ sites\ Web\ uniques\ de\ machine}$$

5. Système selon la revendication 2, le composant de filtre étant conçu pour effectuer :

a) le filtrage d'une perte de séquence, afin de déterminer les séquences qui seront présentées au système, de telle sorte que si la perte de séquence est inférieure à un nombre prédéterminé, tous les sites Web au sein de ladite séquence n'apparaissent pas dans le composant de site Web et le nombre de sites Web dans le composant de machine sera réduit ;
b) le filtrage du résultat afin de permettre la sélection de résultats refusés, mandatés ou observés ;
c) le marquage de classificateur, afin de permettre la sélection entre des étiquettes de site Web bénins ou suspects ; et
d) un calcul de moyenne en pourcentage afin de permettre l'élimination de machines présentant un pourcentage de leurs sites web suspects inférieur au nombre prédéterminé, à partir de la visualisation de composants de machine.

Fig. 1

Fig. 2

EP 4 024 253 B1

site info

| Site | Filter Result | Avg. sequence loss | Number of machines | Avg. Time taken | Avg. cs_bytes | Avg. Duration | Number of Records |
|---|---|---|---|---|---|---|---|
| 007gayboys.com | DENIED | 10 | 1 | 5 | 3,328 | 0 | 1 |
| 0190-livesex.com | DENIED | 11 | 1 | 44 | 3,781 | 0 | 1 |
| 069porn.com | DENIED | 7 | 1 | 73 | 3,233 | 0 | 1 |
| 0dayporno.com | DENIED | 5 | 1 | 70 | 3,447 | 0 | 13 |
| 1-800-bigtits.co.. | DENIED | 9 | 1 | 845 | 442 | 0 | 1 |
| 1000giribest.co.. | DENIED | 10 | 1 | 491 | 353 | 0 | 1 |
| 100bucksbabes... | DENIED | 9 | 1 | 37 | 3,167 | 0 | 1 |
| 100famosasdes... | DENIED | 10 | 1 | 21 | 3,768 | 0 | 1 |
| 100homemade... | DENIED | 8 | 1 | 18 | 3,343 | 0 | 1 |
| 100upskirts.com | DENIED | 3 | 1 | 9 | 3,289 | 0 | 1 |
| 101nudegirls.co.. | DENIED | 10 | 1 | 188 | 3,594 | 0 | 1 |
| 10minutes.eu | DENIED | 10 | 1 | 7 | 3,247 | 0 | 1 |
| 123collants.com | DENIED | 10 | 1 | 105 | 3,343 | 0 | 1 |
| 15-daifuku.com | DENIED | 10 | 1 | 534 | 3,897 | 0 | 2 |
| 171gifs.com | DENIED | 7 | 3 | 172 | 3,045 | 0 | 53 |
| 18-teen-porn.co.. | DENIED | 10 | 1 | 16 | 3,271 | 0 | 5 |

**Fig. 3**

# Data Filtering

| 6.51 |
|------|

Filter Result

| (All) | ▽ |
|-------|---|

Classifier Label

| (All) | ▽ |
|-------|---|

Avg. percentage

0.2070　　　　　　　　　　　　　　　　0.9375

**Fig. 4**

Fig. 5

Graph threshold

18

User score

User =
EMEA1/a062094
EMEA1/a634885
EMEA1/a136340
EMEA1/a172423
EMEA1/a107266
EMEA1/a167414
EMEA1/a900444
EMEA1/a818126
EMEA1/a263615
EMEA1/a845073

Sites

Distinct count of Site

| Site | Filter Result = | Avg. seq. loss | Number of machines | Avg. Time taken | Avg. cs_bytes | Avg. Duration | Number of Records |
|------|-----------------|----------------|--------------------|-----------------|---------------|---------------|-------------------|
| analonty.org | DENIED | 11 | 3 | 23 | 3,224 | 0 | 4 |
| analporn.pics | DENIED | 10 | 1 | 21 | 3,428 | 0 | 1 |
| aname.net | OBSERVED | 11 | 1 | 208 | 3,041 | 0 | 2 |
| ancensored.com | DENIED | 11 | 12 | 224 | 2,010 | 0 | 34 |
| angelsx.com | DENIED | 11 | 1 | 4 | 3,738 | 0 | 1 |
| anglickyslovnik.eu | DENIED | 11 | 2 | 156 | 3,642 | 0 | 2 |
| angsrvr.com | DENIED | 10 | 1 | 39 | 3,477 | 0 | 1 |
| anilos.com | DENIED | 11 | 1 | 27 | 3,894 | 0 | 2 |
| animalporno.xyz | OBSERVED | 11 | 1 | 46 | 3,699 | 0 | 1 |
| animalfreeporn.c... | DENIED | 11 | 1 | 2 | 3,592 | 0 | 1 |
| animalporn.pink | DENIED | 11 | 1 | 366 | 3,714 | 0 | 1 |
| animestar.org | DENIED | 11 | 1 | 73 | 2,607 | 0 | 2 |
| ann-angel.com | DENIED | 10 | 1 | 368 | 4,000 | 0 | 1 |
| annettehavenpor... | DENIED | 11 | 6 | 14 | 3,522 | 0 | 12 |
| annunci69.it | DENIED | 12 | 1 | 12 | 3,748 | 0 | 2 |

EMEA1/a136340 — 66 — EMEA1/a107266
EMEA1/a136340 — 43 — EMEA1/a634885
EMEA1/a634885 — 22 — EMEA1/a107266
EMEA1/a634885 — 43 — EMEA1/a062094
EMEA1/a634885 — 19 — EMEA1/a062094
EMEA1/a136340 — 66 — EMEA1/a062094

Fig. 6

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20200076842 A
- US 20180063168 A

- IL 279697
- EP 21216471